# EUROPEAN PATENT APPLICATION

(11) **EP 1 854 427 A1**
(43) Date of publication of application: **14.11.2007**
(21) Application number: 07008389.4
(22) Date of filing: 25.04.2007
(51) Int. Cl.: A61C 5/08, A61C 5/10, A61C 13/00

(54) **Dental restoration aids**

(30) Priority: 09.05.2006 US 431068
(71) Applicant: Heraeus Kulzer GmbH, 63450 Hanau (DE)
(72) Inventor: Ruppert, Klaus, Dr., 63477 Maintal (DE); Renz, Karl-Heinz, 60489 Frankfurt (DE); Savic, Novica, 63691 Ranstadt (DE); Stange, Frank-Uwe, 88085 Langenargen (DE); Neumann, Raquel, 64291 Darmstadt (DE); Holden, Chris, New Milford CT 06776 (US)
(74) Representative: Kühn, Hans-Christian

(57) **Abstract**

In a method of producing a dental restoration comprising the steps of
◁ selecting a pre-shaped dental crown as defined in claim 2 of adequate size, geometry and/or color,
◁ applying the crown over the core/stump for trial fit,
◁ adjusting occlusion for fit,
◁ removing the crown from the core/stump,
◁ placing a dentine/enamel bonding on core/stump,
◁ placing an adhesive cement (light-, self- or dual-cure) inside the crown,
◁ re-applying the crown to core/stump for final fixing,
◁ removing uncured excess adhesive cement,
◁ light curing with dental curing light to cure the dental restoration and fix crown to core/stump,
◁ removing protection film from outer surface of dental restoration,
◁ optionally fine tuning or polishing;

a kit may be used comprising
A at least one pre-shaped dental crown made from a plastically deformable dental composite material curable by light,
B a container impermeable to light, in which the pre-shaped dental crown is kept before it is applied to a tooth stump,
C optionally a film which covers the outer surface of the pre-shaped dental crown.

## Description

The invention relates to kits for producing permanent or temporary dental crowns; their use as aids for producing custom fit dental restorations; as well as a method of producing a dental restoration.

### Background of the Invention

Manufacturing a final crown for a patient typically requires a length of time of between one and three weeks. In order to protect the existing exposed dentition and to maintain the health and integrity of the gingival areas, the patient needs to wear a provisional restoration. In many instances, the dentist will fabricate a provisional crown directly chair-side. This procedure can take a significant amount of chair time and as a result be quite costly.

US5403188 relates to dental crowns and bridges made from a thermoplastic molding composition. The composition is solid at 38°C, has a melting or softening point that comfortably can be withstood by oral tissues, and can be imprinted with a heat-stable custom shape memory and semi-thermoplastic properties by shaping the composition to a desired shape and then causing or permitting the resin to undergo polymerization. The preparation of crowns and bridges is exemplified.

DE20023670U1 describes oversized preformed artificial teeth, which are machined to the required shape according to a set of digital data. They are placed on a prepared dental stump and cemented.

DE19635357A1/C2 describes a dental crown having a stiff outer shell and a plastically deformable core.

DE4418130A1 describes an industrially preshaped crown with vertical slits along its walls, which can be fitted to a plurality of stump geometries.

### Summary of the Invention

By using a prefabricated, sculptable crown made of a light curing composite material with crown geometry, the dentist can directly apply the crown himself, chair-side, in a much shorter period of time compared to the techniques and materials used today - thus saving time and ultimately costs for both the dentist and patient.

### Detailed Description

Kits for producing a dental restoration of the invention comprise
- **A**: at least one pre-shaped dental crown made from a plastically deformable dental composite material curable by light,
- **B**: a container impermeable to light, in which the pre-shaped dental crown is kept before it is applied to a tooth stump,
- **C**: optionally a protective film which covers the outer surface of the pre-shaped dental crown.

The protective film is for example a product of Epurex Films GmbH, Walsrode Germany. It protects the surface from oxygen, which may inhibit final curing.

The sculptable material is generally an uncured or semi cured dental composite material curable by light. It is important for applicability that the uncured composite does not change its shape under gravity, but - nevertheless - may be sculptured by the dentist. These properties will be achieved by adding rheological additives (i.e. pyrogenic silica, dendrimers, etc.).

By using a dental composite as basic material for pre-shaped provisional restorations, similar low abrasion values will be achieved as with modern filling materials. This is a considerable advantage compared to the unfilled 2-component-systems as used until now. Moreover such 2-component-systems without fillers show severe toxic disadvantages as a result of using MMA and redox initiator systems (peroxide).

The procedure of the invention can be as follows:
◁ Selection of preshaped crown of adequate size and geometry
◁ Crown applied over the core/stump for trial fit
◁ Occlusion adjusted for fit
◁ Crown removed
◁ Adhesive medium placed inside crown
◁ Crown re-applied to core/stump for final fixing
◁ Light curing with dental curing light to fix crown to core/stump
◁ Fine tuning, polish
or:
◁ Selection of preshaped crown of adequate size and geometry
◁ Crown applied over the core/stump for trial fit
◁ Occlusion adjusted for fit
◁ Crown removed
◁ Light curing with dental curing light
◁ Adhesive medium or cement placed inside crown
◁ Crown re-applied to core/stump for final fixing
◁ Fine tuning, polish
or:
◁ Selection of preshaped crown of adequate size and geometry
◁ Crown applied over the core/stump for trial fit
◁ Occlusion adjusted for fit
◁ Light curing with dental curing light
◁ Crown removed
◁ Adhesive medium or cement placed inside crown
◁ Crown re-applied to core/stump for final fixing
◁ Fine tuning, polish
In more detail the method involves
◁ selecting a pre-shaped dental crown as defined in claim 1 of adequate size, geometry and/or color,
◁ applying the crown over the core/stump for trial fit,
◁ adjusting occlusion for fit,
◁ removing the crown from the core/stump,
   ◁ placing a dentin/enamel bonding on core/stump,
   ◁ placing an adhesive cement (light-, self- or dual-cure) inside the crown,
◁ re-applying the crown to core/stump for final fixing,
◁ removing uncured excess adhesive cement,
◁ light curing with dental curing light to cure the dental restoration and fix crown to core/stump,
◁ removing protection film from outer surface of dental restoration,
◁ optionally fine tuning or polishing.

The shaped crown can be used as a provisional restoration or as a low-price final fixed restoration.

### Manufacturing:

Creation of natural-like morphology of tooth occurs by pressing the composite material in tooth shaped moulds made from special steel.
For better esthetics the restoration can be manufactured individually in multiple (2-3) color layers.

The components of the dental composite material used within the invention comprise preferably a monomer or monomer mixture; inorganic fillers; rheological additives; photoinitiators; stabilizers; and color pigments.

Examples of suitable monomers are
monofunctional or polyfunctional (meth)acrylates, which can be used alone or in mixtures. Examples of such compounds to consider are methylmethacrylate, isobutylmethacrylate, cyclo-hexylmethacrylate, triethylene glycoldimethacrylate, diethylene glycoldimethacrylate, tetraethylene glycoldimethacrylate, ethylene glycoldimethacrylate, polyethylene glycoldimethacrylate, butandiol dimethacrylate, hexandiol methacrylate, decandiol dimethacrylate, dodecandiol dimethacrylate, bisphenol-A-dimethacrylate, trimethylolpropane trimethacrylate, ethoxylated bisphenol-A-dimethacrylate, but also bis-GMA (2,2-bis-4-(3-methacryloxy-2-hydroxypropyl)-phenylpropane) as well as the reaction products from isocyanates, in particular di- and/or triisocyanates and methacrylates that contain OH-groups, and the appropriate acrylates of all the above compounds. Examples of reaction products of isocyanates are the transformation products of 1 mol hexamethylene diisocyanate with 2 mol 2-hydroxyethylmethacrylate, of 1 mol (tri(6-isocyanatohexyl)biuret with 3 mol hydroxy ethylmethacrylate and of 1 mol trimethylhexamethylene diisocyanate with 2 mol hydroxyethylmethacrylate, which are also called urethane dimethacrylates. Suitable monomers are the monomers themselves respectively, polymerizable prepolymers made from them as well as mixtures thereof.

Preferred crosslinking monomers are e.g. 2.2-bis-4-(3-methacryloxy-2-hydroxypropyl)-phenyl propane) (bis-GMA), i.e. the transformation product of glycidyl methacrylate and bisphenol-A (containing OH-groups), and 7,7,9-trimethyl-4,13-dioxo-3,14-dioxa-5,12-diazahexadecan-1,16-diyl-dimethacrylate (UDMA), i.e. the urethane dimethacrylate from 2 mol 2-hydroxyethylmethacrylate (HEMA) and 1 mol 2-2,4-trimethylhexamethylene diisocyanate (containing urethane groups). Furthermore, transformation products of glycidyl methacrylate with other bisphenols, like e.g. bisphenol-B (2,2'-bis-(4-hydroxyphenyl)-butane), bisphenol-F (2,2'-methylene diphenol) or 4,4'-dihydroxydiphenyl, as well as transformation products of 2 mol HEMA or 2-hydroxypropyl(meth)acrylate with, in particular, 1 mol, known diisocyanates, such as e.g. hexamethylene diisocyanate, m-xylylene diisocyanate or toluylene diisocyanate are preferred as crosslinking monomers. Preferred monomers are bis-GMA, Bisphenol-A-Ethoxydimethacrylate , 2,2-bis[4-(2-hydroxy-3-methacryloxypropoxy)phenyl]propane, polymeric ethoxylated Bisphenol A dimethacrylates (Bis-EMA), Bis EMA (2,6), Bis EMA(6), triethylene glycol dimethacrylate (TEGDMA), 1,6-bis(methacryloxy-2-ethoxycarbonylamino)-2,4,4-trimethylhexan (UDMA).
A preferred combination of monomers is Bis-GMA and TEGDMA.

Examples of suitable inorganic fillers are naturally-occurring or synthetic materials such as quartz, nitrides (e.g., silicon nitride), glasses derived from, for example Ce, Sb, Sn, Zr, Sr, Ba and Al, colloidal silica, feldspar, borosilicate glass, kaolin, talc, titania, and zinc glass; low Mohs hardness fillers such as those described in U.S. Pat. No. 4,695,251; and submicron silica particles (e.g., pyrogenic silicas such as the "Aerosil" Series "OX 50", "130", "150" and "200" silicas sold by Degussa and "Cab-O-Sil M5" silica sold by Cabot Corp.).

Examples of suitable organic filler particles include filled or unfilled pulverized polycarbonates, polyepoxides, and the like.
Mixtures of these fillers are also contemplated, as well as combination fillers made from organic and inorganic materials.
Preferred filler particles are glasses, especially Ba-Al-B-F-Silicate glasses.
Preferably the surface of the filler particles is treated with a coupling agent in order to enhance the bond between the filler and the polymerizable resin. The use of suitable coupling agents include gamma-methacryloxypropyltrimethoxysilane, gamma-mercaptopropyltriethoxysilane, gamma-aminopropyltrimethoxysilane, and the like.

A suitable rheological additive is for example pyrogenic silica. However, other possible rheological additives include bentonites or diatomaceous earths.

Suitable Photointiators are well known in the art.
Such initiators can be used alone or in combination with one or more accelerators and/or sensitizers.

The photoinitator should be capable of promoting free radical crosslinking of the ethylenically unsaturated moiety on exposure to light of a suitable wavelength and intensity. It also preferably is sufficiently shelf stable and free of undesirable coloration to permit its storage and use under typical dental conditions. Visible light photoinitiators are preferred. The photoinitiator frequently can be used alone, but typically it is used in combination with a suitable donor compound or a suitable accelerator (for example, amines, peroxides, phosphorus compounds, ketones and alpha-diketone compounds).

Preferred visible light-induced initiators include camphorquinone (which typically is combined with a suitable hydrogen donor such as an amine), diaryliodonium simple or metal complex salts, chromophore-substituted halomethyl-s-triazines and halomethyl oxadiazoles. Particularly preferred visible light-induced photoinitiators include combinations of an alpha-diketone, e.g., camphorquinone, and a diaryliodonium salt, e.g., diphenyliodonium chloride, bromide, iodide or hexafluorophosphate, with or without additional hydrogen donors (such as sodium benzene sulfinate, amines and amine alcohols).

Preferred ultraviolet light-induced polymerization initiators include ketones such as benzyl and benzoin, and acyloins and acyloin ethers. Preferred commercially available ultraviolet light-induced polymerization initiators include 2,2-dimethoxy-2-phenylacetophenone ("IRGACURE 651 ") and benzoin methyl ether (2-methoxy-2-phenylacetophenone), both from Ciba-Geigy Corp.

The photoinitiator should be present in an amount sufficient to provide the desired rate of photopolymerization. This amount will be dependent in part on the light source, the thickness of the layer to be exposed to radiant energy, and the extinction coefficient of the photoinitiator. Typically, the photoinitiator components will be present at a total weight of about 0.01 to about 5%, more preferably from about 0.1 to about 5%, based on the total weight of the composition.
If desired, the compositions of the invention can contain adjuvants such as cosolvents, pigments, inhibitors, accelerators, viscosity modifiers, surfactants, rheology modifiers, colorants, medicaments and other ingredients that will be apparent to those skilled in the art. Optionally, the compositions may contain stabilizers.
Stabilizers are usually added to ensure shelf stability of the compositions. They include antioxidants like Butylhydroxytoluene (BHT). They are added in amounts from 0,05 to 0,5 wt% , preferably about 0.2 wt.%
Color pigments are added to provide compositions in different shades. They are well known in the art and include iron pigments, they are added in amounts of about 0.01 to 0.3 wt%.

### Example

A light curing dental composite material is mixed from the following ingredients:
Ba-Al-B-F-Silicate glass (70 wt.%)
Bis-GMA (16.3 wt.%) and TEGDMA (6.9 wt. %) as reactive diluent
pyrogenic silica (6 wt. %)
camphorquinone and coinitiators (0.5 wt.%)
BHT (0.2 wt.%)
color pigments 0.1 wt.%

The resulting dental material is shaped by pressing in suitable steel molds. The outer surface of dental restoration is covered by a thin, flexible film. The film should be resistant against chemical solvents and acrylates/methacrylates, for good curing depth a high transparency below 500 nm wavelength is necessary. TPU and EVA are suitable film materials. The film functions as a handling aid for the dental restoration as well as protection against oxygen. This helps to produce surfaces of high glossiness after curing without the need to polish.

Subsequently the molded crown is applied over the core/stump for trial fit and the occlusion is adjusted for fit. After the crown is removed a dentin/enamel bonding is applied to the core/stump.
An adhesive medium is applied to the inside of the molded crown. The crown is then placed onto the core/stump for final fixing by light curing with a dental curing light.
The curing can apply to harden both to the adhesive and the molded, semi cured crown.
Finally a fine tuning and polishing step is performed.

Kits of the invention can be produced by packing in adequate packaging each crown to prevent premature light curing as well as to protect the preformed shape, and optionally adding
- a handling device for pre-shaped dental crown to prevent damage or contamination of surface and to guarantee and/or
- a handling device for pre-shaped dental crown to prevent oxygen-inhibition layer on the surface.

## Claims

1. A kit for producing a dental restoration comprising
**A** at least one pre-shaped dental crown made from a plastically deformable dental composite material curable by light,
**B** a container impermeable to light, in which the pre-shaped dental crown is kept before it is applied to a tooth stump,
**C** optionally a film which covers the outer surface of the pre-shaped dental crown.

2. A kit according to claim 1 wherein component A comprises several pre-shaped dental crowns of different tooth geometries, and optionally different colors.

3. A method of producing a dental restoration comprising the steps of
◁ selecting a pre-shaped dental crown as defined in claim 2 of a size, geometry and/or color according to the needs of a patient,
◁ applying the dental crown over a dental core/stump in the mouth of said patient for trial fit,
◁ adjusting the occlusion of said dental crown for fit,
◁ removing the dental crown from the core/stump,
◁ placing a dentine/enamel bonding on the core/stump,
◁ placing an adhesive cement (light-, self- or dual-cure) inside the dental crown,
◁ re-applying the dental crown to the dental core/stump for final fixing,
◁ removing uncured excess adhesive cement,
◁ applying dental curing light to cure said dental crown and fix said dental crown to said core/stump,
◁ optionally removing the protective film, if present, from the outer surface of dental crown,
◁ optionally fine tuning or polishing the dental crown.
